(19) **Europäisches Patentamt / European Patent Office / Office européen des brevets**

(11) **EP 2 131 418 A1**

(12) # EUROPEAN PATENT APPLICATION
published in accordance with Art. 153(4) EPC

(43) Date of publication:
**09.12.2009 Bulletin 2009/50**

(21) Application number: **08721148.8**

(22) Date of filing: **26.02.2008**

(51) Int Cl.:
***H01M 2/16*** (2006.01)

(86) International application number:
**PCT/JP2008/053728**

(87) International publication number:
**WO 2008/105555 (04.09.2008 Gazette 2008/36)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.02.2007 JP 2007046779**

(71) Applicant: **Sumitomo Chemical Company, Limited Tokyo 104-8260 (JP)**

(72) Inventors:
• **NISHIDA, Yasunori**
  **Tsukuba-shi**
  **Ibaraki (JP)**

• **SHINOHARA, Yasuo**
  **Tsuchiura-shi**
  **Ibaraki 300-4111 (JP)**
• **SATO, Hiroyuki**
  **Niihama-shi**
  **Ehime (JP)**

(74) Representative: **Hart-Davis, Jason et al**
  **Cabinet Beau de Loménie,**
  **158, rue de l'Université**
  **75340 Paris Cedex 07 (FR)**

(54) **SEPARATOR**

(57)    A separator having a laminated porous film in which a heat-resistant layer containing a heat-resistant resin and a shut-down layer containing a thermoplastic resin are laminated, in which the heat-resistant layer has a thickness of not less than 1 $\mu$m and not more than 10 $\mu$m, and the heat-resistant layer further contains a filler containing substantially spherical particles.

**Description**

FIELD OF THE INVENTION

The present invention relates to a separator, and more particularly to a separator for a non-aqueous electrolyte secondary battery.

BACKGROUND ART

A separator comprises a porous film having micropores, and it is used for a non-aqueous electrolyte secondary battery such as a lithium ion secondary battery and a lithium polymer secondary battery. In the non-aqueous electrolyte secondary battery, it is important to interrupt an electric current and prevent excessive flow of the electric current (shut-down), when an abnormal current flows in the battery due to an electrical short circuit between a cathode and an anode. Therefore, the separator is required to shut-down the current (to plug the micropores of the porous film) at a temperature as low as possible, when the temperature rises exceeding a normal operating temperature, and even if the temperature inside the battery rises to a certain high temperature after the current is shut-down, not to break the film due to the high temperature and to maintain the shut-down state as it is, in other words, to have high heat-resistance.
Examples of conventional separators include a separator made of a laminated porous film in which a polyolefin layer and a heat-resistant layer are laminated. As a specific example of such a separator, JP-A-2005-285385 and JP-A-2006-032246 describe a separator produced by coating one side of a polyethylene film with a solution prepared by dissolving a polyamide as a heat-resistant material in N-methyl-2-pyrrolidone as a water-soluble solvent, then immersing the coated polyethylene film in water to remove N-methyl-2-pyrrolidone and to deposit and coagulate the polyamide, and drying the film.

SUMMARY OF INVENTION

Although the separator produced as described above has few defects in gas permeability, a non-aqueous electrolyte secondary battery comprising such a separator has an insufficient electric capacity.
An object of the present invention is to provide a separator which has high heat-resistance and also which can increase the electric capacity of the battery when used in a non-aqueous electrolyte secondary battery.
In order to solve the above problem, the present inventors have conducted earnest studies. As a result, they have completed the present invention. That is, the present application provides the following inventions.

<1> A separator comprising a laminated porous film in which a heat-resistant layer containing a heat-resistant resin and a shut-down layer containing a thermoplastic resin are laminated, wherein the heat-resistant layer has a thickness of not less than 1 $\mu$m and not more than 10 $\mu$m, and the heat-resistant layer further contains a filler comprising substantially spherical particles.
<2> The separator of <1>, wherein the heat-resistant layer has a thickness of not less than 1 $\mu$m and not more than 5 $\mu$m.
<3> The separator of <1> or <2>, wherein the heat-resistant resin is a nitrogen-containing aromatic polymer.
<4> The separator of <3>, wherein the heat-resistant resin is a para-oriented aromatic polyamide.
<5> The separator of any one of <1> to <4>, wherein the thermoplastic resin is polyethylene.
<6> The separator of any one of <1> to <5>, wherein the ratio of A/B is not less than 0.1 and not more than 1, wherein the thickness of the heat-resistant layer is let be A ($\mu$m), and the thickness of the shut-down layer is let be B ($\mu$m).
<7> The separator of any one of <1> to <6>, wherein the weight of the filler is not less than 20 and not more than 95 when the total weight of the heat-resistant layer is let be 100.
<8> The separator of any one of <1> to <7>, wherein the substantially spherical particles are alumina particles.
<9> The separator of <8>, wherein the substantially spherical particles are alumina particles having substantially no fractured surfaces.
<10> The separator of any one of <1> to <9>, wherein the substantially spherical particles constituting the filler have a number average particle diameter of not less than 0.01 $\mu$m and not more than 1 $\mu$m.

According to the present invention, a separator which has high heat-resistance and also which can increase the electric capacity of the battery when used in a non-aqueous electrolyte secondary battery can be provided. In addition, such a battery has a high rate characteristic (large current discharge characteristic), and therefore the present invention is industrially very useful.

## EMBODIMENTS OF THE INVENTION

The present invention provides a separator made of a laminated porous film in which a heat-resistant layer containing a heat-resistant resin and a shut-down layer containing a thermoplastic resin are laminated. The heat-resistant layer has a thickness of not less than 1 $\mu$m and not more than 10 $\mu$m, and further contains a filler comprising substantially spherical particles. According to the present invention, the specific filler is contained in the heat-resistant layer of the separator having a relatively thin heat-resistant layer with a thickness of not less than 1 $\mu$m and not more than 10 $\mu$m, or of not less than 1 $\mu$m and not more than 5 $\mu$m,. The present inventors consider that this can lead to the decrease of thermal shrinkage of the heat-resistant layer, thus resulting in further improvement of heat resistance of the separator, and also lead to uniform control of the diameter of the micropores in the heat-resistant layer in a range of about not less than 0.03 $\mu$m and not more than about 0.15 $\mu$m, which is preferable for a separator, and therefore lead to the uniformization of ion permeability and an increase in the electric capacity of the battery, when the thus formed separator is used in a non-aqueous electrolyte secondary battery.

In the present invention, when the heat-resistant layer has a thickness of not less than 1 $\mu$m and not more than 5 $\mu$m, or of not less than 1 $\mu$m and not more than 4 $\mu$m, the effects of the present invention can be further heightened. The heat-resistant layer of the present invention has the micropores, and the pore size (diameter) thereof is usually 3 $\mu$m or less, preferably 1 $\mu$m or less, more preferably 0.2 $\mu$m or less. The more uniform the pore size of the micropores, the better it is. The heat-resistant layer has a porosity of usually not less than 30% and not more than 80% by volume, preferably not less than 40% and not more than 70% by volume.

In the present invention, examples of the heat-resistant resin include polyamides, polyimides, polyamideimides, polycarbonates, polyacetals, polysulfones, polyphenylene sulfides, polyether ether ketones, aromatic polyesters, polyether sulfones, and polyetherimides. In view of further improvement of the heat resistance, polyamides, polyimides, polyamideimides, polyether sulfones and polyetherimides are preferable, and polyamides, polyimides and polyamideimides are more preferable. Nitrogen-containing aromatic polymers such as aromatic polyamides (para-oriented aromatic polyamides and meta-oriented aromatic polyamides), aromatic polyimides and aromatic polyamideimides are still more preferable, and aromatic polyamides are especially preferable. In view of production easiness, para-oriented aromatic polyamides (hereinafter sometimes referred to as "para-aramids") are particularly preferable. In addition, the heat-resistant resin may also include poly-4-methylpentene-1, and cyclic olefin polymers.

In the separator of the present invention, the heat resistance can be improved, in other words, the temperature at which the film is thermally damaged, can be raised by the use of the heat-resistant resin as described above. The temperature at which the film is thermally damaged is usually 160°C or more, though it depends on the kind of the heat-resistant resin. When the nitrogen-containing aromatic polymer as described above is used as the heat-resistant resin, the temperature at which the film is thermally damaged can be raised up to about 400°C. When poly-4-methylpentene-1 and the cyclic olefin polymer are used, the temperature at which the film is thermally damaged can be elevated up to about 250°C and up to about 300°C, respectively.

The para-aramid is produced by condensation polymerization of a para-oriented aromatic diamine and a halide of a para-oriented aromatic dicarboxylic acid, and it substantially comprises repeating units in which amide bonds are bonded at the para-positions of the aromatic ring or at orientation positions analogous to the para-positions (for example, orientation positions extending along the same axis or in parallel in opposite directions, such as those found in 4,4'-biphenylene, 1,5-naphthalene, and 2,6-naphthalene). Specifically, the para-oriented para-aramids or para-aramids having the orientation analogous to the para-oriented para-aramids such as poly(para-phenylene terephthalamide), poly(para-benzamide), poly(4,4'-benzanilideterephthalamide), poly(para-phenylene-4,4'-biphenylene dicarboxylic acid amide), poly(para-phenylene-2,6-naphthalene dicarboxylic acid amide), poly(2-chloro-para-phenylene terephthalamide), and para-phenylene terephthalamide/2,6-dichloro-para-phenylene terephthalamide copolymers can be exemplified.

Among the aromatic polyimides described above, wholly aromatic polyimides produced by condensation polymerization of an aromatic acid dianhydride with a diamine are preferable. Specific examples of the aromatic acid dianhydride include pyromellitic dianhydride, 3,3',4,4'-diphenylsulfonetetracarboxylic dianhydride, 3,3',4,4'-benzophenonetetracarboxylic dianhydride, 2,2'-bis(3,4-dicarboxyphenyl)hexafluoropropane, and 3,3',4,4'-biphenyl tetracarboxylic dianhydride. Specific examples of the diamine include, but not limited to, oxydianiline, para-phenylenediamine, benzophenonediamine, 3,3'-methylenedianiline, 3,3'-diaminobenzophenone, 3,3'-diaminodiphenylsulfone, and 1,5'-naphthalene diamine. In the present invention, solvent-soluble polyimides are preferably used. Examples of the polyimides include polycondensate polyimides of 3,3',4,4'-diphenylsulfonetetracarboxylic dianhydride with an aromatic diamine.

Examples of the aromatic polyamideimides include products prepared by condensation polymerization using an aromatic dicarboxylic acid with an aromatic diisocyanate, and products prepared by condensation polymerization of an aromatic acid dianhydride with an aromatic diisocyanate. Specific examples of the aromatic dicarboxylic acid include isophthalic acid and terephthalic acid. Specific examples of the aromatic acid dianhydride include trimellitic anhydride. Specific examples of the aromatic diisocyanate include 4,4'-diphenylmethanediisocyanate, 2,4-tolylenediisocyanate, 2,6-tolylenediisocyanate, ortho-tolylenediisocyanate, and m-xylenediisocyanate.

In the present invention, the shut-down layer comprises a thermoplastic resin. The shut-down layer has micropores, like the heat-resistant layer described above does, and the pore size is usually 3 $\mu$m or less, preferably 1 $\mu$m or less. The shut-down layer usually has a porosity of not less than 30% and not more than 80% by volume, preferably not less than 40% and not more than 70% by volume. The shut-down layer acts to block the micropores by the softening of the thermoplastic resin constituting the layer, when a temperature rises above a normal operating temperature in a non-aqueous electrolyte secondary battery.

In the present invention, as the thermoplastic resin, those which soften at a temperature of not less than 80°C and not more than 180°C can be used, and those which are not dissolved in an electrolyte of the non-aqueous electrolyte secondary battery may be selected. Specific examples of such resins include polyolefins such as polyethylene and polypropylene, and thermoplastic polyurethanes. They may be used as a mixture of two or more of them. The polyethylenes are preferable, because they soften at a relatively low temperature to induce shutdown. Specific examples of the polyethylenes include low-density polyethylenes, high-density polyethylenes and linear polyethylenes, as well as ultrahigh molecular weight polyethylenes. The thermoplastic resins preferably contain at least ultrahigh molecular weight polyethylene, since the piercing strength of the shut-down layer can be further improved. In some cases, the thermoplastic resins preferably contain a wax composed of a polyolefin with a low molecular weight (a weight average molecular weight of 10,000 or less) from the viewpoint of the easy production of the shut-down layer.

In the present invention, the shut-down layer usually has a thickness of not less than 3 $\mu$m and not more than 30 $\mu$m, preferably not less than 5 $\mu$m and not more than 20 $\mu$m. The separator of the present invention comprises the heat-resistant layer and the shut-down layer which are laminated each other, and the separator has a thickness of usually 20 $\mu$m or less, preferably 10 $\mu$m or less. The ratio of the thickness A of the heat-resistant layer ($\mu$m) to the thickness B of the shut-down layer ($\mu$m), that is, A/B is preferably not less than 0.1 and not more than 1.

Hereinafter, the filler used in the present invention will be explained. The filler used in the present invention comprises substantially spherical particles. Any material selected from organic powders, inorganic powders and mixtures thereof may be used for the filler so long as the obtained particles, which constitute the filler, are substantially spherical particles. In the present invention, the substantially spherical particles encompass perfectly spherical particles. That is, in the present invention, the substantially spherical particles include particles having an aspect ratio (that is, a ratio of a major axis to a minor axis) within a range of 1 to 1.5. The aspect ratio of the particles can be determined by observing an electron microphotograph of the particles.

Examples of the organic powder described above include powders made of organic substances, for example, homopolymers of styrene, vinyl ketone, acrylonitrile, methyl methacrylate, ethyl methacrylate, glycidyl methacrylate, glycidyl acrylate or methyl acrylate, or copolymers of two or more monomers; fluororesins such as polytetrafluoroethylene, tetrafluoroethylene-hexafluoropropylene copolymers, tetrafluoroethylene-ethylene copolymers and polyvinylidene fluoride; melamine resins; urea resins; polyolefins; and polymethacrylates. The organic powder may be used alone or as a mixture of two or more of them. Among these organic powders, the polytetrafluoroethylene powder is preferable because of the chemical stability thereof.

Examples of the inorganic powder as described above include powders made of inorganic substances, for example, metal oxides, metal nitrides, metal carbides, metal hydroxides, carbonates, and sulfates, and specifically includes particles made of alumina, silica, titanium dioxide, or calcium carbonate. The inorganic powder may be used alone or as a mixture of two or more of them. Among these inorganic powders, the alumina powder is preferable because of the chemical stability thereof.

In the present invention, when the alumina powder is used as the filler, the substantially spherical particles which constitute the filler are alumina particles. Preferably, the alumina particles have substantially no fractured surfaces. For producing a powder composed of such alumina particles, the methods described in JP-A-6-191833, JP-A-6-191836, and JP-A-7-206430 are employed.

In the present invention, the substantially spherical particles which constitute the filler have a number average particle diameter of not less than 0.01 $\mu$m and not more than 2 $\mu$m, preferably not less than 0.01 $\mu$m and not more than 1 $\mu$m, more preferably not less than 0.01 $\mu$m and not more than 0.5 $\mu$m. When the particle diameter is within the above range, the effects of the present invention can be further improved. The number average particle diameter used herein is calculated from the particle diameters measured using a scanning electron microscope. Specifically, 50 substantially spherical particles are picked up from a microphotograph, the particle diameter of each particle is measured, and the then the particle diameters of 50 particles are averaged and used as a number average particle diameter.

In the present invention, the porosity and the pore size in the heat-resistant layer can be more precisely controlled by adjusting the number average particle diameter of the substantially spherical particles, which constitute the filler, and the content of the filler in the heat-resistant layer.

In the present invention, the filler content in the heat-resistant layer depends on the gravity of the filler material, but the weight of the filler is usually not less than 20 and not more than 95, preferably not less than 30 and not more than 90, with the total weight of the heat-resistant layer being 100.

In the present invention, it is essential that the filler comprises the substantially spherical particles, but it may contain particles which are not substantially spherical such as plate particles and acicular particles in such an amount that the effects of the present invention are not impaired.

In the present invention, among the above-mentioned components, the combination of the para-oriented aromatic polyamide as the heat-resistant resin and the filler made up of the alumina particles having a number average particle diameter of not less than 0.1 $\mu$m and not more than 1 $\mu$m, and substantially having no fractured surface is particularly preferable.

From the viewpoint of the possibility of quick shutdown of the electrical current at a low temperature and ion permeability, the separator of the present invention preferably has a gas permeability of not less than 50 sec./100 cc and not more than 300 sec./100 cc, more preferably not less than 50 sec./100 cc and not more than 200 sec./100 cc, when measured by a Gurley method,. According to the present invention, even if the pore size is small, such as 0.1 $\mu$m or less, the separator has a good gas permeability as described above.

The separator of the present invention is particularly useful as a separator for a non-aqueous electrolyte secondary battery such as a lithium ion secondary battery and a lithium polymer secondary battery. In addition, it can also be used for an aqueous electrolyte secondary battery, a non-aqueous electrolyte primary battery, or a capacitor.

Here, a method for producing the separator of the present invention will be described.

Firstly, a method for producing a shut-down layer will be outlined. A method for producing the shut-down layer of the present invention is not particularly limited, and includes a method wherein a film composed of a thermoplastic resin produced by a known method, such as a method comprising the steps of forming a film from a thermoplastic resin to which a plasticizer has been added, and then removing the plasticizer from the film with an adequate solvent, as described in JP-A-7-29563, or a method comprising the steps of providing a film of a thermoplastic resin which has been produced by a conventional process, and selectively drawing structurally weak amorphous parts of the film to form micropores, as described in JP-A-7-304110. When the shut-down layer of the present invention comprises a polyolefin resin containing an ultrahigh molecular weight polyethylene and a low molecular weight polyolefin having a weight average molecular weight of 10,000 or less, the layer is produced preferably by the following method, from the viewpoint of the production cost: a method comprising the following steps:

(1) preparing a polyolefin resin composition by kneading 100 parts by weight of an ultrahigh molecular weight polyethylene, 5 to 200 parts by weight of a low molecular weight polyolefin having a weight average molecular weight of 10,000 or less, and 100 to 400 parts by weight of an inorganic filler;
(2) molding the polyolefin resin composition prepared in step (1) to form a sheet;
(3) removing the inorganic filler from the sheet obtained in step (2); and
(4) drawing the sheet obtained in the step (3) to form a shut-down layer, or a method comprising the steps of

(1) preparing a polyolefin resin composition by kneading 100 parts by weight of an ultrahigh molecular weight polyethylene, 5 to 200 parts by weight of a low molecular weight polyolefin having a weight average molecular weight of 10,000 or less, and 100 to 400 parts by weight of an inorganic filler;
(2) molding the polyolefin resin composition prepared in step (1) to form a sheet;
(3) drawing the sheet obtained in step (2); and
(4) removing the inorganic filler from the drawn sheet obtained in step (3) to form a shut-down layer.

The former method in which the resulting sheet is drawn after the inorganic filler is removed from the sheet is preferable, because the shut-down temperature of the separator of the present invention in which the resulting shut-down layer and a heat-resistant layer are laminated can be made lower.

The inorganic filler has a number average particle diameter (diameter) of preferably 0.5 $\mu$m or less, more preferably 0.2 $\mu$m or less, from the viewpoints of strength and ion permeability of the shut-down layer. Here, the number average particle diameter of the filler is a value measured by a scanning electron microscopy. Specifically, 50 inorganic filler particles are randomly selected from a microphotograph of the filler particles, the particle diameter of each particle is measured, and the particle diameters of the 50 particles are averaged and used as a number average particle diameter of the filler particles.

Examples of the inorganic fillers include calcium carbonate, magnesium carbonate, barium carbonate, zinc oxide, calcium oxide, aluminum hydroxide, magnesium hydroxide, calcium hydroxide, calcium sulfate, silicic acid, zinc oxide, calcium chloride, sodium chloride and magnesium sulfate. These inorganic fillers can be removed from a sheet or film with an acid or alkali solution. In the present invention, it is preferable to use calcium carbonate, because particles having a very small particle diameter can be easily obtained.

A method for producing the polyolefin resin composition is not particularly limited. Materials for forming a polyolefin resin composition such as a polyolefin resin and an inorganic filler are mixed with a mixing apparatus such as a roll, a Banbury mixer, a single screw extruder or a twin screw extruder to give a polyolefin resin composition. When the materials are mixed, additives such as fatty acid esters, stabilizers, anti-oxidants, UV absorbers, and flame retardants may optionally be added thereto.

A method for forming a sheet from the polyolefin resin composition is not particularly limited, and the sheet can be produced by a sheet forming method such as inflation molding, calendering, T-die extrusion or scaifing. The sheet is preferably formed by the following method, because a sheet having high precision in the film thickness can be obtained.

In a preferable method for producing a sheet from a polyolefin resin composition, a polyolefin resin composition is roll-formed using a pair of rotational molding tools, the surface temperature of which is adjusted to a temperature higher than the melting point of a polyolefin resin contained in the polyolefin resin composition. The surface temperatures of the rotational molding tools are preferably a temperature of (the melting point + 5)°C or higher. The upper limit of the surface temperature is preferably a temperature of (the melting point + 30)°C or lower, more preferably (the melting point + 20)°C or lower. Rolls and belts are exemplified as a pair of rotational molding tools. The circumferential speeds of the pair of rotational molding tools are not necessarily the same, and the difference between them may be within a range of about ±5%. When a shut-down layer is formed using the sheet obtained by such a method, a shut-down layer excellent in strength, ion permeability and gas permeability can be obtained. A laminate of the single layer sheets obtained by the above-mentioned method may be used for producing the shut-down layer.

When the polyolefin resin composition is roll-molded with a pair of rotating molding tools, a strand of the polyolefin resin composition extruded from an extruder may be introduced into a gap between a pair of rotating molding tools, or may be formed into pellets of the polyolefin resin composition and then the pellets may be used.

When the sheet of the polyolefin resin composition or the sheet of the polyolefin resin composition from which the inorganic filler is removed is drawn, a tenter, a roll or an autograph may be used. The draw ratio is preferably from 2 to 12, more preferably from 4 to 10, in view of gas permeability. The sheet is usually drawn at a temperature of not lower than the softening point of a polyolefin resin and not exceeding the melting point thereof. The drawing temperature is preferably from 80 to 115°C. When the drawing temperature is too low, the sheet is easily damaged upon drawing. When it is too high, the gas permeability or the ion permeability of the resulting film sometimes lowers. The sheet is preferably heat-set after drawing. The heat-set temperature is preferably a temperature lower than the melting point of a polyolefin resin.

According to the present invention, the shut-down layer containing the thermoplastic resin prepared by the above method, and the heat-resistant layer are laminated to form a laminated porous film, and the separator is obtained therefrom. The heat-resistant layer may be provided on one side or both sides of the shut-down layer.

Examples of a method for laminating the shut-down layer and the heat-resistant layer include a method comprising the steps of separately producing a heat-resistant layer and a shut-down layer and laminating them, a method comprising coating at least one side of a shut-down layer with a coating liquid comprising a heat-resistant resin and a filler to form a heat-resistant layer, and the like. In the present invention, the latter method is preferable, in view of the formation of a relatively thin heat-resistant layer and the productivity. A specific embodiment of the method comprising coating at least one side of a shut-down layer with a coating liquid comprising a heat-resistant resin and a filler to form a heat-resistant layer comprises the following steps of:

(a) preparing a slurry coating liquid in which 1 to 1,500 parts by weight, based on 100 parts by weight of the heat-resistant resin, of the filler is dispersed in a polar organic solvent solution containing 100 parts by weight of the heat-resistant resin;

(b) coating at least one side of the shut-down layer with the coating liquid to form a coating film; and

(c) precipitating the heat-resistant resin from the coating film by means of moisturization, removal of the solvent, immersion in a solvent in which the heat-resistant resin is not dissolved, or the like, followed by, if necessary, drying.

Preferably, the coating liquid is continuously applied using a coating apparatus described in JP-A-2001-316006 by a method described in JP-A-2001-23602.

When the para-aramid is used as the heat-resistant resin in the polar organic solvent solution, a polar amide solvent and a polar urea solvent may be used as the polar organic solvent. Specific examples of these solvents include, but are not limited to, N,N-dimethyl formamide, N,N-dimethyl acetoamide, N-methyl-2-pyrrolidone (NMP), and tetramethylurea.

When the para-aramid is used as the heat-resistant resin, in order to improve the solubility of the para-aramid in a solvent, preferably an alkali metal chloride or an alkaline earth metal chloride is added to the reaction mixture during the polymerization of the para-aramid. Specific examples of the chlorides include, but are not limited to, lithium chloride and calcium chloride. The amount of the chloride added to the polymerization system is preferably within a range of not less than 0.5 mole and not more than 6.0 moles, more preferably within a range of not less than 1.0 mole and not more than 4.0 moles, per mole of amide groups formed in the course of the condensation polymerization. When the amount of the chloride is less than 0.5 mole, the resulting para-aramid may have insufficient solubility. The amount exceeding 6.0 moles may be undesirable, because the amount substantially exceeds the amount of the chloride soluble in the solvent. In general, when the amount of the alkali metal chloride or the alkaline earth metal chloride is less than 2% by weight, the para-aramid may have insufficient solubility. When it exceeds 10% by weight, the alkali metal chloride or the alkaline earth metal chloride may hardly be dissolved in the polar organic solvent such as the polar amide solvent or the polar urea solvent.

When the aromatic polyimide is used as the heat-resistant resin, dimethylsulfoxide, cresol and o-chlorophenol are preferably used as a polar organic solvent dissolving the aromatic polyimide, besides those listed as the solvent dissolving the aramid.

As the method for preparing a slurry coating liquid by dispersing the filler, a pressure type disperser such as a Gorlin homogenizer or a nanomizer may be used.

Examples of the method for applying the slurry coating liquid include knife coating, blade coating, bar coating, gravure coating and die coating. The bar or knife coating is simple and easy, while the die coating is industrially preferable because an apparatus for die coating has such a structure that the solution is not exposed to an air.

When the heat-resistant layer and the shut-down layer are separately produced and these layers are laminated, it is preferable to fix them by means of an additive or heat-sealing.

Hereinafter, a non-aqueous electrolyte secondary battery comprising the separator of the present invention is described using a lithium ion secondary battery as an example.

The lithium ion secondary battery may be produced by any known method. For example, a battery can be produced by laminating a cathode sheet comprising a cathode collector coated with an electrode mixture for a cathode, an anode sheet comprising an anode collector coated with an electrode mixture for an anode, and the separator of the present invention and winding the laminate to give an electrode member, placing the electrode member in a container such as a battery can, and impregnating the electrode member in the container with an electrolytic solution prepared by dissolving an electrolyte in an organic solvent. The heat-resistant layer in the separator of the present invention may be brought into contact with either the cathode sheet or the anode sheet. When a pair of the heat-resistant layers are provided on the respective sides of the shut-down layer, the heat-resistant layers can be brought into contact with the cathode sheet and the anode sheet, respectively.

The electrode member has a cross section, which appears when the electrode member is cut along direction vertical to the axis of winding, in the shape of a circle, an oval, a rectangle, a rectangle the edges of which are chamfered, and the like. The battery can be of any shape such as a paper sheet, a coin, a cylinder or a box-shape.

As the cathode sheet, a sheet comprising a cathode collector coated with an electrode mixture for a cathode which comprises a cathode active material, a conductive agent and a binder is usually used. The electrode mixture for a cathode preferably comprises a material capable of doping or dedoping lithium ions as a cathode active material, a carbonaceous material as a conductive agent, and a thermoplastic resin as a binder.

Specific examples of the cathode active materials include metal composite oxides comprising at least one transition metal element selected from the group consisting of V, Mn, Fe, Co, Ni, Cr and Ti, and an alkali metal element such as Li or Na, preferably composite oxides having an $\alpha$-NaFeO$_2$ structure as a basic structure, more preferably composite oxides such as lithium cobaltate, lithium nickelate and a composite oxide wherein a part of nickel of lithium nickelate is replaced with other element such as Mn or Co, from the viewpoint of a high average discharge potential. Composite oxides having a spinel structure such as spinel lithium manganese as a basic structure may also be exemplified.

Examples of the binders include thermoplastic resins, specifically polyvinylidene fluoride, vinylidene fluoride copolymers, polytetrafluoroethylene, tetrafluoroethylene-hexafluoropropylene copolymers, tetrafluoroethylene-perfluoroalkyl vinyl ether copolymers, ethylene-tetrafluoroethylene copolymers, vinylidene fluoride-hexafluoropropylene-tetrafluoroethylene copolymers, thermoplastic polyimides, carboxymethyl cellulose, polyethylene, and polypropylene.

Examples of the conductive agents include carbonaceous materials, specifically natural graphite, artificial graphite, cokes and carbon black. They may be used as a mixture of two or more of them.

Examples of the cathode collector include aluminum and stainless steel. Aluminum is preferable because of lightweight, low cost and easy processability.

Examples of a method for coating a cathode collector with an electrode mixture for a cathode include a pressure molding method, and a method comprising the steps of forming an electrode mixture for a cathode into a paste with a solvent or the like, coating a cathode collector with the paste, and drying the paste following by pressure bonding by pressing.

As the anode sheet, a sheet comprising a collector coated with an electrode mixture for an anode which comprises a material capable of doping or dedoping lithium ions may be used. Also, a lithium metal sheet and a lithium alloy sheet may be used. Specific examples of the materials capable of doping or dedoping lithium ions include carbonaceous materials such as natural graphite, artificial graphite, cokes, carbon black, pyrolytic carbons, carbon fibers, and baked organic polymer compounds. Also, a chalcogenide such as an oxide or a sulfide capable of doping or dedoping lithium ions at a potential lower than that of the cathode may be used. Among the carbonaceous materials, a carbonaceous material comprising graphite such as natural graphite or artificial graphite as a main component is preferable, because of good potential flatness and a low average discharge potential. The carbonaceous material is in the shape of any of a flake such as natural graphite, a sphere such as mesocarbon microbead, a fiber such as graphitized carbon fiber, an aggregate of a fine powder of these materials, and the like.

When an electrode mixture for an anode including polyethylene carbonate is used in a case where the electrolytic solution does not contain ethylene carbonate which is described later, the cycle characteristic and high current discharge characteristics of the obtained battery can be preferably improved.

The electrode mixture for an anode may optionally comprise a binder. Examples of the binders include thermoplastic resins, specifically polyvinylidene fluoride, polyvinylidene fluoride copolymers, vinylidene fluoride-hexafluoropropylene-tetrafluoroethylene copolymers, thermoplastic polyimides, carboxymethyl cellulose, polyethylene, and polypropylene.

The chalcogenide such as an oxide or a sulfide used as the material capable of doping or dedoping lithium ions contained in the electrode mixture for an anode include a crystalline or amorphous chalcogenide such as an oxide or a sulfide which comprises an element of Group 13, 14 or 15 of the Periodic Table, in particular, an amorphous chalcogenide comprising tin oxide. A carbonaceous material as a conductive agent and a thermoplastic resin as a binder may also be added thereto as necessary.

Examples of the anode collector used in the anode sheet include copper, nickel, and stainless steel. Copper is preferable, because it hardly forms an alloy with lithium, and it is easily formed into a thin film. Examples of a method for coating an anode collector with an electrode mixture for an anode include the same methods as those in the case of the cathode, that is, a pressure molding method, and a method comprising the steps of forming an electrode mixture for an anode into a paste with a solvent or the like, coating an anode collector with the paste, and drying the paste following by pressure bonding by pressing.

As the electrolytic solution, for example, an electrolytic solution comprising a lithium salt dissolved in an organic solvent may be used. Examples of the lithium salt include $LiClO_4$, $LiPF_6$, $LiAsF_6$, $LiSbF_6$, $LiBF_4$, $LiCF_3SO_3$, $LiN(SO_2CF_3)_2$, $LiC(SO_2CF_3)_3$, $Li_2B_{10}Cl_{10}$, a lithium salt of a lower aliphatic carboxylic acid, and $LiAlCl_4$. They may be used as a mixture of two or more of them. Among these lithium salts, it is preferable to use a mixture including at least one salt selected from the group consisting of $LiPF_6$, $LiAsF_6$, $LiSbF_6$, $LiBF_4$, $LiCF_3SO_3$, $LiN(SO_2CF_3)_2$ and $LiC(SO_2CF_3)_3$, all of which comprises fluorine atoms.

Examples of the organic solvent contained in the electrolytic solution include carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acrylonitrile and butyronitrile; amides such as N,N-dimethyl formamide and N,N-dimethyl acetamide; carbamates such as 3-methyl-2-oxazolidone; sulfur-containing compounds such as sulpholane, dimethyl sulfoxide, and 1,3-propane sultone; above solvents to which a fluorine-containing substituent is introduced may be used. Usually, they are used as a mixture of two or more of them. Among them, a mixed solvent comprising a carbonate is preferable, and a mixed solvent of a cyclic carbonate and an acyclic carbonate and a mixed solvent of a cyclic carbonate and an ether are more preferable. Among the mixed solvents of the cyclic carbonate and the acyclic carbonate, a mixed solvent comprising ethylene carbonate, dimethyl carbonate or ethyl methyl carbonate is preferable, since they have a wide operating temperature range and good load characteristics, and they are hardly degraded even if the graphite material such as natural graphite or artificial graphite is used as the active material for an anode. It is preferable to use an electrolytic solution comprising a lithium salt having a fluorine atom such as $LiPF_6$, and an organic solvent having a fluorine-containing substituent, since a particularly excellent effect of improving safety can be obtained. A mixed solvent comprising dimethyl carbonate and an ether having a fluorine-containing substituent such as pentafluoropropyl methyl ether or 2,2,3,3-tetrafluoropropyl difluoromethyl ether is more preferable, because of its good high current discharge characteristics.

When a solid electrolyte is used instead of the above-mentioned electrolytic solution, a lithium polymer secondary battery is obtained. As the solid electrolyte, for example, a polymer electrolyte such as a high molecular weight polyethylene oxide, a high molecular weight compound comprising at least one of a polyorganosiloxane chain and a polyoxyalkyene chain may be used. Also, a so-called gel-type electrolyte in which a nonaqueous electrolytic solution is impregnated in a polymer may be used. When a sulfide electrolyte such as $Li_2S$-$SiS_2$, $Li_2S$-$GeS_2$, $Li_2S$-$P_2S_5$ or $Li_2S$-$B_2S_3$, or an inorganic compound electrolyte comprising a sulfide such as $Li_2S$-$SiS_2$-$Li_3PO_4$ or $Li_2S$-$SiS_2$-$Li_2SO_4$ is used, the safety of a battery can be further improved.

Hereinafter, the present invention will be explained in more detail by the following examples. The evaluation of separators and the production of non-aqueous electrolyte secondary batteries having a separator were performed as follows.

Evaluations of Separator

(1) Measurement of Thickness

The thicknesses of a separator and a shut-down layer were measured in accordance with JIS K 7130-1992. The thickness of a heat-resistant layer was obtained by subtracting the thickness of the shut-down layer from the thickness of the separator.

(2) Measurement of Gas Permeability by Gurley Method

The gas permeability of a separator was measured using a Gurley densometer with a digital timer manufactured by Yasuda Seiki Seisakusho Ltd. in accordance with JIS P 8117.

(3) Porosity

The obtained porous film was cut into a square sample (10 cm x 10 cm), and the weight W (g) and the thickness D (cm) of the sample were measured. The weight (Wi) of each layer in the sample was measured, the volume of each layer was calculated from Wi and the absolute specific gravity (g/cm$^3$) of the material of each layer. Then, the porosity (% by volume) was calculated by the following equation:

$$\text{Porosity (\% by volume)} = 100 \times \{1 - (\text{W1/Absolute Specific Gravity 1} + \text{W2/Absolute Specific Gravity 2} + \cdots + \text{Wn/Absolute Specific Gravity n})/(10 \times 10 \times \text{D})\}$$

Production and Evaluation of Non-Aqueous Electrolyte Secondary Battery Having Separator

(1) Production of Cathode Sheet

Carboxymethylcellulose, polytetrafluoroethylene, acetylene black, and a lithium cobaltate powder as a cathode active material were dispersed in water and the mixture was kneaded to prepare a paste of an electrode mixture for a cathode. The weight ratio of the components contained in this paste, that is, the weight ratio of carboxymethylcellulose : polytetrafluoroethylene : acetylene black : lithium cobaltate powder : water was 0.75 : 4.55 : 2.7 : 92 : 45. The paste was applied to both sides of a cathode collector made of an aluminum foil having a thickness of 20 $\mu$m in predefined surface regions, and the obtained product was dried, roll-pressed, and slit to obtain a cathode sheet. The surface region of the aluminum foil having no applied electrode mixture for a cathode had a length of 1.5 cm, and an aluminum lead was resistance-welded to the uncoated region.

(2) Production of Anode Sheet

Carboxymethylcellulose, natural graphite and artificial graphite were dispersed in water and the mixture was kneaded to prepare a paste of an electrode mixture for an anode. The weight ratio of the components contained in this paste, that is, the weight ratio of carboxymethyl cellulose : natural graphite : artificial graphite : water was 2.0 : 58.8 : 39.2 : 122.8. The paste was applied to the both sides of an anode collector made of a copper foil having a thickness of 12 $\mu$m in predefined surface regions, and the obtained product was dried, roll-pressed and slit, thereby obtaining an anode sheet. The surface region of the copper foil having no applied electrode mixture for an anode had a length of 1.5 cm, and a nickel lead was resistance-welded to the uncoated region.

(3) Production of Cylindrical Battery

A separator, the cathode sheet, the anode sheet (length of a surface region having no applied electrode mixture for an anode: 30 cm) were laminated in the order of the cathode sheet, the separator and the anode sheet so that the part of the anode sheet with a surface region having no applied electrode mixture for an anode constituted the outermost layer. Then, the laminate was wound from its one end to form an electrode member. The electrode member was inserted in a battery can and then impregnated with an electrolytic solution comprising LiPF$_6$ dissolved in a mixed liquid of ethylene carbonate, dimethyl carbonate and ethyl methyl carbonate at a volume ratio of 16 : 10 : 74 in a concentration of 1 mole/liter. The can was sealed via a gasket with a battery lid, which also acted as a positive terminal to obtain a 18650 cylindrical battery (non-aqueous electrolyte secondary battery). The layers were laminated so that the heat-resistant layer in the separator was brought into contact with the cathode sheet, and the shut-down layer in the separator was brought into contact with the anode sheet.

(4) Evaluation of Charge-Discharge Performance of Cylindrical Battery

The cylindrical battery produced as described above was charged to 50% and then aged by maintaining the battery at 60°C for 15 hours. Then, a rate characteristic (high current discharge characteristic) and a cycle characteristic of the battery were evaluated under the following evaluation conditions. As an electric capacity, a capacity upon the first discharge (the battery being charged under conditions of a maximum charge voltage of 4.3 V, a charge time of 3 hours and a charge current of 1 C, and discharged under conditions of a minimum discharge voltage of 3.0 V and a discharge current of 0.2 C) was used.

<Evaluation of Rate Characteristic>

The battery was charged under charge conditions of a maximum charge voltage of 4.3 V, a charge time of 3 hours, and a charge current of 1 C, and discharged under discharge conditions of a minimum discharge voltage of 3.0 V, and a discharge current of 0.2 C, 1 C or 2 C. The battery was charged under the charge conditions described above, prior to each discharge test.

<Cycle Characteristic>

The battery was charged under charge conditions of a maximum charge voltage of 4.3 V, a charge time of 3 hours and a charge current of 1 C, and discharged under discharge conditions of a minimum discharge voltage of 3.0 V and a discharge current of 1 C. The charge and discharge was repeated 200 times.

Example 1

(1) Preparation of Coating Liquid

In 4200 g of NMP, 272.7 g of calcium chloride was dissolved, and then 132.9 g of para-phenylenediamine was added and completely dissolved therein. To the resulting solution, 243.3 g of terephthalic acid dichloride (hereinafter referred to as TPC) was gradually added to perform polymerization, whereby a para-aramid was obtained. The reaction mixture was diluted with NMP to obtain a para-aramid solution (A) having a concentration of 2.0% by weight. To 100 g of the obtained para-aramid solution, 4 g of an alumina powder comprising substantially spherical particles (Sumicorundum AA-03 manufactured by Sumitomo Chemical Co., Ltd.; the number average particle diameter: 0.3 $\mu$m) was added as a filler and mixed, and the mixture was treated with a nanomizer three times, filtered through a 1000-mesh metallic mesh, and degassed under reduced pressure to prepare a slurry coating liquid (B). The amount of the alumina powder (filler) was 67% by weight based on the total weight of the para-aramid and the alumina powder.

(2) Production and Evaluation of Separator

As a shut-down layer, a polyethylene porous film (thickness: 12 $\mu$m, gas permeability: 140 sec./100 cc, average pore size: 0.1 $\mu$m, porosity: 50%) was used. The polyethylene porous film was fixed onto a 100 $\mu$m-thick PET film, and the porous film was coated with the slurry coating liquid (B) using a bar coater manufactured by Tester Sangyo Co., Ltd. The integral laminate of the coated porous film and the PET film was immersed in water as a poor solvent to deposit a para-aramid porous film (a heat-resistant layer), and then the solvent was removed to obtain a separator 1 consisting of the laminate of the heat-resistant layer and the shut-down layer. The separator 1 had a thickness of 16 $\mu$m, and the para-aramid porous film (heat-resistant layer) had a thickness of 4 $\mu$m. The separator 1 had a gas permeability of 180 sec./100 cc and a porosity of 50%. It was found that uniform micropores having a pore size of about 0.04 $\mu$m to 0.05 $\mu$m were formed on the surface of the heat-resistant layer of the separator 1, when the surface was observed with a scanning electron microscope (SEM).

(3) Evaluation of Non-Aqueous Electrolyte Secondary Battery

The cylindrical battery was prepared using the separator 1 in the above-mentioned manner, and its electric capacity was evaluated. As a result, the electric capacity was as high as 2000 mAh. The evaluation of the rate characteristic revealed that the ratio of the capacitance upon 2 C discharge to that upon 0.2 C discharge (2 C/0.2 C) was 80%. The evaluation of the cycle characteristic revealed that the ratio of the capacitance upon the 200th discharge to that upon the first discharge (200th/first) was 90%.

Comparative Example 1

A separator 2 was prepared in the same manner as in Example 1 except that the para-aramid solution (A) in Example 1 was used as the coating liquid. The separator 2 had a thickness of 16 $\mu$m, and the para-aramid porous film (heat-resistant layer) had a thickness of 4 $\mu$m. The separator 2 had a gas permeability of 170 see./100 cc, and a porosity of 50%. It was found that micropores having a pore size of about 0.05 $\mu$ to 5 $\mu$m were formed on the surface of the heat-resistant layer in the separator 2 and therefore the variation of pore sizes was large, when the surface was observed with a scanning electron microscope (SEM).

The cylindrical battery was produced using the separator 2 in the above-mentioned manner, and its electric capacity was evaluated. As a result, the electric capacity was as low as 1800 mAh. The evaluation of the rate characteristic revealed that the ratio of the capacitance upon 2 C discharge to that upon 0.2 C discharge (2 C/0.2 C) was 50%. The evaluation of the cycle characteristic revealed that the ratio of the capacitance upon the 200th discharge to that upon the first discharge (200th/first) was 80%.

The results are summarized in Table 1 and Table 2.

Table 1

|  | Content of substantially spherical particles in heat-resistant layer | Number average particle diameter of substantially spherical particles | Thickness of separator | Thickness of heat-resistant layer | Thickness of heat-resistant layer/ thickness of shut-down layer |
|---|---|---|---|---|---|
|  | % by weight | $\mu$m | $\mu$m | $\mu$m | $\mu$m/$\mu$m |
| Ex. 1 | 67 | 0.3 | 16 | 4 | 4/12 |
| Comp. Ex. 1 | 0 | - | 16 | 4 | 4/12 |

Table 2

|  | Gas permeability | Porosity | Electric capacity | Rate characteristic | Cycle characteristic |
|---|---|---|---|---|---|
|  | Second/100 cc | % | mAh | 2 C/0.2 C | 200th/1st |
| Ex. 1 | 180 | 50 | 2000 | 80% | 90% |
| Comp. Ex. 1 | 170 | 50 | 1800 | 50% | 80% |

**Claims**

1. A separator comprising a laminated porous film in which a heat-resistant layer containing a heat-resistant resin and a shut-down layer containing a thermoplastic resin are laminated, wherein the heat-resistant layer has a thickness of not less than 1 $\mu$m and not more than 10 $\mu$m, and the heat-resistant layer further contains a filler comprising substantially spherical particles.

2. The separator according to claim 1, wherein the heat-resistant layer has a thickness of not less than 1 $\mu$m and not more than 5 $\mu$m.

3. The separator according to claim 1 or 2, wherein the heat-resistant resin is a nitrogen-containing aromatic polymer.

4. The separator according to claim 3, wherein the heat-resistant resin is a para-oriented aromatic polyamide.

5. The separator according to any one of claims 1 to 4, wherein the thermoplastic resin is polyethylene.

6. The separator according to any one of claims 1 to 5, wherein the ratio of A/B is not less than 0.1 and not more than 1, wherein the thickness of the heat-resistant layer is let be A ($\mu$m), and the thickness of the shut-down layer is let be B ($\mu$m).

7. The separator according to any one of claims 1 to 6, wherein the weight of the filler is not less than 20 and not more than 95 when the total weight of the heat-resistant layer is let be 100.

8. The separator of according to any one of claims 1 to 7, wherein the substantially spherical particles are alumina particles.

9. The separator according to claim 8, wherein the substantially spherical particles are alumina particles having substantially no fractured surfaces.

10. The separator of according to any one of claims 1 to 9, wherein the substantially spherical particles constituting the filler have a number average particle diameter of not less than 0.01 $\mu$m and not more than 1 $\mu$m.

## INTERNATIONAL SEARCH REPORT

| | International application No. |
|---|---|
| | PCT/JP2008/053728 |

A. CLASSIFICATION OF SUBJECT MATTER
*H01M2/16*(2006.01)i

According to International Patent Classification (IPC) or to both national classification and IPC

B. FIELDS SEARCHED

Minimum documentation searched (classification system followed by classification symbols)
H01M2/16

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-307193 A  (Sumitomo Chemical Co., Ltd.), 09 November, 2006 (09.11.06), Claims 1 to 8; Par. Nos. [0090] to [0096] & US 2006/234031 A1     & KR 2006-106720 A & CN 1846840 A | 1-10 |
| X | JP 2006-59733 A  (Tomoegawa Paper Co., Ltd.), 02 March, 2006 (02.03.06), Claims 1 to 8; Par. Nos. [0012] to [0022]; examples (Family: none) | 1-10 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 May, 2008 (26.05.08) | 03 June, 2008 (03.06.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 131 418 A1**

## REFERENCES CITED IN THE DESCRIPTION

### Patent documents cited in the description

- JP 2005285385 A
- JP 2006032246 A
- JP 6191833 A
- JP 6191836 A
- JP 7206430 A
- JP 7029563 A
- JP 7304110 A
- JP 2001316006 A
- JP 2001023602 A